# EUROPEAN PATENT SPECIFICATION

(11) **EP 1 844 651 B1**
(45) Date of publication and mention of the grant of the patent: **28.10.2015**
(21) Application number: 07425205.7
(22) Date of filing: 10.04.2007
(51) Int. Cl.: A01K 49/00

(54) **Confining structure to confine the queen bee of a colony of bees within a beehive**
Einsperrstruktur zum Einsperren der Bienenkönigin eines Bienenvolkes in einem Bienenstock
Structure de confinement pour confiner la reine d'une colonie d'abeilles dans une ruche

(30) Priority: 13.04.2006 IT PD20060065 U
(43) Date of publication of application: 17.10.2007
(73) Proprietor: API-MO.BRU DI MOZZATO BRUNO, 35010 Campodoro (PD) (IT)
(72) Inventor: Mozzato, Bruno, 35010 Campodoro PD (IT)
(74) Representative: Vinci, Marcello

(56) References cited:
- EP-A- 0 439 001
- WO-A-02/05632
- FR-A- 2 575 900
- GB-A- 2 265 811
- US-A- 1 652 539
- US-A- 2 644 175

## Description

This invention refers to a confining structure to confine the queen bee of a colony of bees of a beehive, which is particularly, yet not exclusively, useful in the professional bee-keeping branch for performing pesticide treatments against the parasite known as varroa.

It is known that this parasite is among a beehive's worst enemies. It affects in fact the entire beehive, generally weakening the colony of bees and inducing its total destruction in the course of a few years. In particular, this parasite is able of affecting the brood just before the operculation of the honeycomb cells containing the brood. This capacity renders any periodical bee-keeper's action for a pesticide treatment problematic. The pesticide treatment in fact exerts its effect on the parasites of a colony of bees, but not on the parasites of the brood, because of the operculation of the cells. The larvae evolving from this brood are consequently also affected by the pest, and, in turn, affect the treated beehive. In order to obviate these consequences, it would be appropriate to carry out such treatments in the absence of a brooding queen bee. In order to satisfy this condition, the queen bee must necessarily be confined to prevent her from laying the brood for the length of time strictly required for initiating and performing the pesticide treating operation. For the purpose of confining the queen bee, the review "Apitalia" No. 2-3/2002 describes a confining structure. The latter essentially comprises a containing body, a reception chamber provided in said containing body to receive said queen bee, at least one introducing opening provided on said containing body and communicating with said chamber to introduce said queen bee into said chamber, occluding means capable of being coupled/uncoupled to/from said containing body to occlude said opening, and a plurality of feeding slots provided on said containing body and communicating with said chamber in order to allow said queen bee to be fed on the part of said colony of bees. The containing body is in particular ... constituted of a cylindrical element. The chamber is in turn formed by a compartment space delimited by the mantle of this element. The introduction openings are again formed by two holes provided at the extremities of this element. The occluding means are formed by simple plugs to be inserted/extracted to/from the holes. The plurality of slots is formed by a series of thinned openings uniformly distributed over said mantle. The use of this structure is essentially as follows. The bee-keeper extracts at least one plug so as to free the respective hole, manually introduces the queen bee through this hole into the compartment space, and occludes the free hole again by using the relative plug. The bee-keeper then sets said structure on the top of the beehive nest, on the upper cross beams of the nesting frame. EP0439001 *describes* a *second type of structure for trapping, storing, transporting and releasing a queen bee according* to *the preamble of the main claim. In particular, it describes suspending means associated with the containing body to suspend said containing body within the nest of* a *beehive.*

The main drawback encountered in this type of structure consists in that its arrangement is excessively peripheral with respect to the beehive nest. This arrangement strongly limits the relations between the queen bee and its colony of bees. Because of this, the colony of bees tends to abandon feeding the queen bee.

A second drawback consists in that said structure allows feeding the queen bee on the part of the colony of bees only from the outside of the containing body. In other words, the bees cannot penetrate into the queen bee's reception chamber through the slots. This drawback limits the relations between the queen bee and its colony of bees. Even in this case, the colony of bees tends to abandon feeding the queen bee.

A third drawback consists in that said structure is handcrafted and thus unsuitable for professional bee-keeping use. The bee-keeper faces in fact numerous difficulties in manipulating the elements of said structure, especially when operating in the open space. In fact these elements are of small size and will not stay connected to each other when the structure is in a disassembled condition.

The aim of the present invention is to create a confining structure to confine the queen bee of a colony of bees into a beehive able of solving the drawbacks and problems found in the structures of a known type.

Within the above described aim, an important object of this invention is to set up a structure able of providing an ideal arrangement of the queen bee with respect to its colony of bees for a confining period of time of adequate length in order to obtain a complete absence of brood able to cover the brood's flitting from the cocoons.

A further object of this invention is to set up a structure wherein the feeding of the queen bee on the part of the colony of bees can occur normally even during the length of time in which the queen bee is in a confined condition.

Not the last object of the invention is to set up a structure suitable for a professional bee-keeping use and at an economical cost.

This aim, these and other objects which will exposed in the following in greater detail, are achieved by a confining structure to confine the queen bee of a colony of bees in accordance with the attached claims.

According to first features, the confining structure, according to this invention, comprises a confining body, a reception chamber provided in said confining body to receive the queen bee, at least one introduction opening provided on said containing body and communicating with said chamber to introduce the queen bee into said chamber, occluding means able of being coupled/uncoupled to/from said containing body to occlude said opening, and a plurality of feeding slots provided on said containing body and communicating with said chamber so as to allow said queen bee to be fed on the part of said colony of bees, and suspending means associated with said containing body so as to suspend said containing body within said beehive nest in order to maintain the proximity of said queen bee to said colony of bees during the confining period of said queen bee.

In this way, the structure achieves the intended aim of creating an ideal arrangement of the queen bee with respect to its colony of bees for a period of confinement of adequate length.

According to other features of the invention, the feeding slots are of a size such as to allow the bees belonging to said colony to transit to and from said reception chamber. The structure thus achieves its object of allowing the feeding of the queen bee on the part of the colony of bees to occur normally even during the confining period.

Moreover and according to further features, the structure of the invention proves to be suitable for professional bee-keeping use, as its elements are of an adequate size for its manipulation and remain connected even in a disassembled condition of the structure, as well as being of low cost because of the constructive modes and devices employed.

Further features and advantages of the invention will become better apparent from the description of an embodiment illustrated for indicative purposes yet non limitative in the enclosed drawings, wherein:

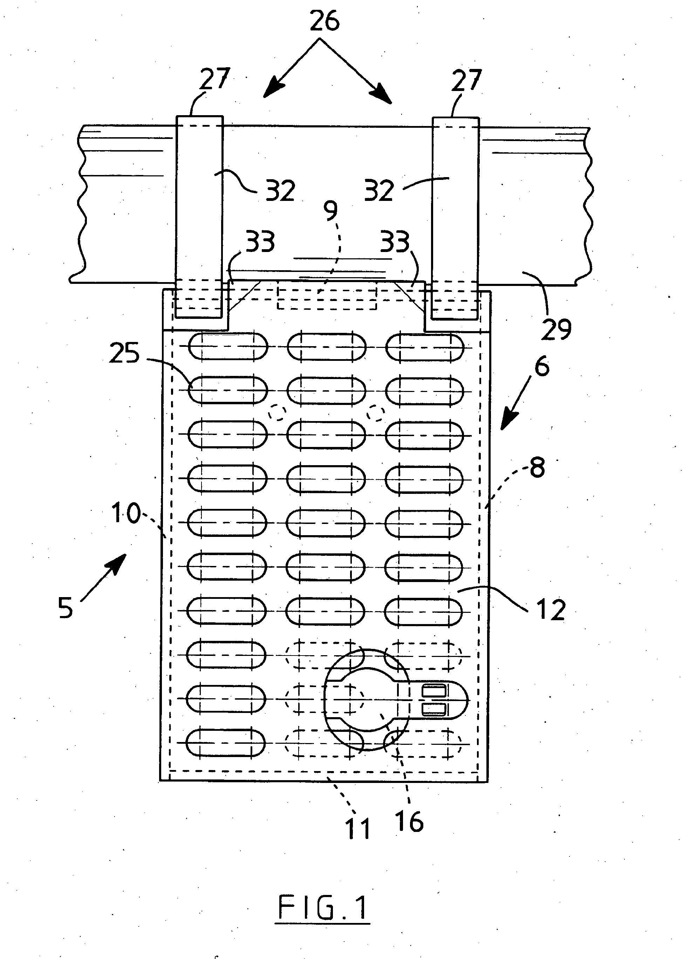

- Fig. 1 represents a frontal view of the structure according to the invention, in a position suspended on a portion of an upper beam of the nesting frame of a beehive;
- Fig. 2 represents a lateral raised side view of the structure of Fig. 1 during the operation of suspending it to the beam;
- Fig. 3 represents a first detailed view of the occluding means of the structure in the preceding figures;
- Fig. 4 represents a second detailed view of said occluding means.

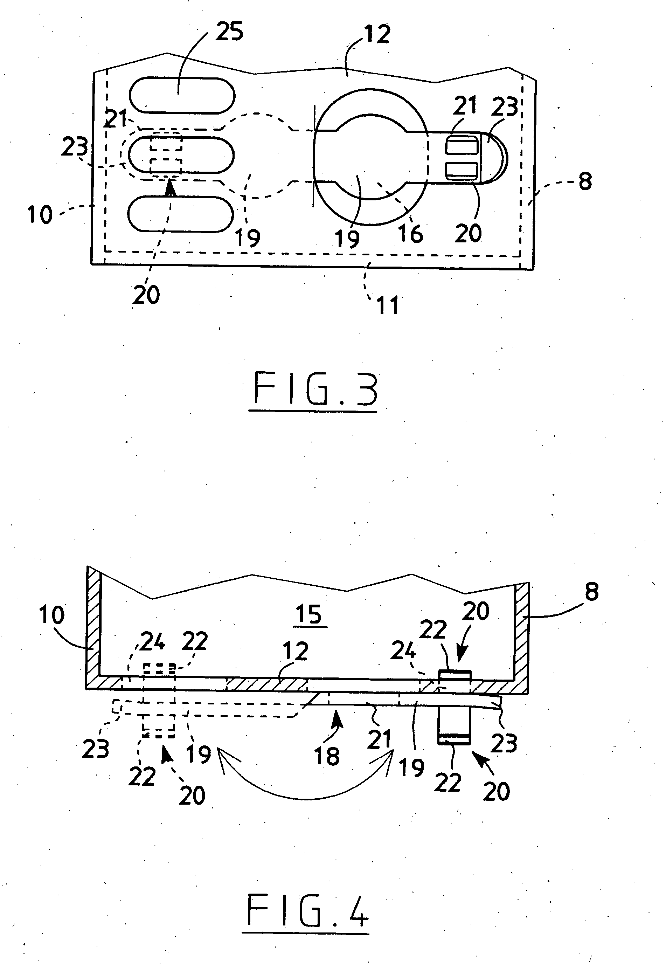

With particular reference to the mentioned figures, the confining structure to confine the queen bee of a colony of bees of a beehive (not shown), indicated as a whole by the reference number 5, comprises above all a containing body 6. Said containing body 6 has an essentially box-like form. In detail, it comprises a rear wall 7, peripheral walls 8, 9, 10 and 11 rigidly connected to each other and to said rear wall 7, a front wall 12 flexibly connected to the lower wall 11 of said peripheral walls 8, 9, 10 and 11 and first engaging elements 13 to engage said front wall 12 with the upper wall 9 of said peripheral walls 8, 9, 10, 11 opposite said lower wall 11. The first engaging elements 13 in turn comprise pairs of projections 14 set side by side and projecting from the zone of said front wall 12 facing the rim of said upper wall 9. Said structure 5 also comprises a reception chamber 15 provided in said confining body 6 for receiving said queen bee. In particular, said reception chamber 15 comprises a space delimited by said rear wall 7, front wall 12 and peripheral walls 8, 9, 10 and 11. Moreover, said structure 5 comprises an introduction opening 16 provided on said containing body 6 and communicating with said chamber 15 to introduce said queen bee into said chamber 15. In particular, said introduction opening 16 comprises an elongated hole provided in the lower zone of said front wall 12. In addition, said structure 5 comprises occluding means, designated as a whole by the reference number 18, which can be coupled/uncoupled to/from said containing body 6 to occlude said opening 16. In detail, said occluding means 18 comprise a door 19 flexibly connected to said front wall 12 so as to assume a first position wherein it closes said introduction opening 16, and a second position wherein it frees said opening 16 and coupling elements, designated as a whole by the reference number 20, to couple said door 19, in said first and said second position, to said front wall 12, as seen especially in Figure 4. These coupling elements 20 comprise an appendix 21 which extends from the rim of said door 19 and a first and a second pair of projections 22 set side by side and extending from one and the other side of said appendix 21 next to the extremity 23 of said appendix 21, so as to engage in the slots 24 found to the right and to the left, respectively, of said opening 16 when said door 19 assumes said first and said second position. Moreover, this structure 5 comprises a plurality of feeding slots 25 provided on said containing body 6 and communicating with said housing chamber 15 to allow said queen bee to be fed on the part of the colony of bees. In detail, said plurality of slots 25 comprises vertical rows of elongated openings provided on the rear wall 7 and the front wall 12. Said openings are preferably of a size such as to allow the bees belonging to said colony to transit to and from said housing chamber 15. Finally, said structure 5 comprises suspending means 26 associated with said containing body 6 to suspend said structure 5 within the nest of said beehive, so as to maintain the proximity of said queen bee to said colony of bees during the period of confinement of said queen bee. In detail, said suspending means 26 comprise a pair of coupling arms 27 to couple said containing body 6 to the rim (not shown) of a nesting frame (not shown) of said beehive (not shown), and second engaging elements, indicated as a whole by the reference number 28, to engage said arms 27 with said upper wall 9. In even more detail, the coupling arms 27 are engaged in an upper beam 29 of said frame. Said arms 27 also comprise first portions 30 rigidly connected to the upper rim of said rear wall 7, second portions 31 rigidly connected to said first portions 30 and third portions 32 flexibly connected to said second portions 31. Said second engaging elements 28 in turn comprise pairs of projections 33 set side by side and provided next to the terminal ends of said arms 27. With this configuration, said containing body 6 lies in a vertical condition within the zone delimited by said frame.

With further reference to the mentioned figures, the ways of producing the structure 5 and the operation of fastening the same structure 5 to the upper beam 29 of the rim of a nesting frame of a beehive occur as follows.

The ways of producing the structure 5 are preferably based on injection moulding of plastic material while holding the coupling arms 27 extended and the front wall 12 in a condition rotated by 180° with respect to its position approached to the peripheral walls 8, 9, 10 and 11.

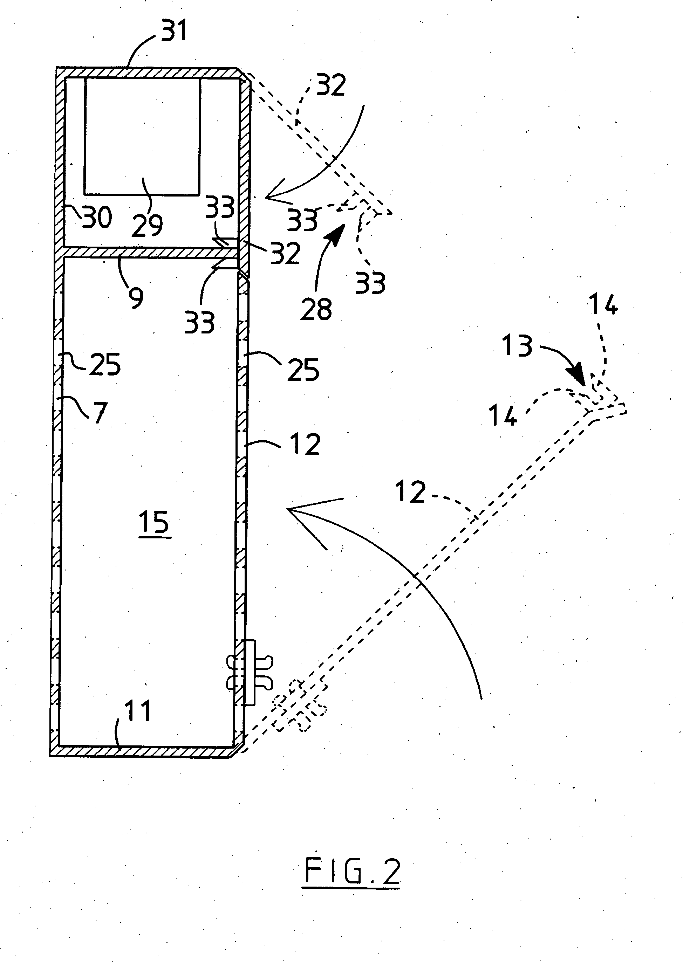

The fastening operation occurs as follows, assuming the coupling arms to be in an extended condition, the front wall 12 in a preliminarily approached condition and the door 19 in the mentioned second position. First of all, the bee keeper extracts from the beehive nest the nesting frame on which he wishes to fasten the structure 5. He then grasps the latter with one hand and approaches the coupling arms 27 to the upper beam 29 of the rim of the chosen nesting frame. Using the free hand, he then bends the third portions 32 of the coupling arms 27 until they assume the configuration illustrated by a continuous line in Fig. 2, and engages the engaging elements 28 in the rim of the upper wall 9. He then captures the queen bee of the colony of bees of the beehive in question and introduces her through the opening 16 into the chamber 15. He then shifts the door 19 from the second to the first position. To end up, the bee-keeper lays down the frame along with the structure 5 inside the beehive nest. Once the confining period of the queen bee is over, the bee-keeper can free her as follows. He acts with a chisel tool on the occluding means 18, so as to separate the latter from the front wall 12.

It has in practice been verified that the structure thus described solves the drawbacks and problems found in the confining structures of the known art. In particular, as has been found, the structure allows achieving an ideal arrangement of the queen bee with respect to its colony of bees for a confining period of adequate length. The feeding of the queen bee on the part of the colony of bees also occurs in a normal way, even in the course of the queen bee's confinement, because the bees can enter and exit into/from the chamber through the slots. Moreover, the structure is suitable for professional bee-keeping because its elements are of a size sufficient for their handling on the part of the bee-keeper and remain connected to the structure even when the latter is in a disassembled condition, and the same is of low cost thanks to the constructive ways and devices employed. In addition, the space available in the chamber is suitable to allow the queen bee a comfortable and extended stay over the confining period, because the arrangement of the containing body within the rim of the nesting frame allows realizing a containing body of adequate size.

The structure according to the invention is susceptible of variations, all of which fall within the scope of the invention, as defined by the appended claims.

In a practical embodiment, the materials employed, the shapes, the dimensions and the executive details may differ from those described herein but be technically equivalent to the same, without thereby abandoning the scope of the invention, as defined by the appended claims.

## Claims

1. Confining structure (5) to confine the queen bee of a colony of bees of a beehive comprising a containing body (6), a reception chamber provided in said containing body (6) to receive said queen bee, at least one introduction opening (16) provided on said containing body (6) and communicating with said chamber to introduce said queen bee into said chamber, occluding means (18) capable of being coupled/uncoupled to/from said box like containing body (6) to occlude said opening (16), and a plurality of feeding slots (25) provided on said containing body (6) and communicating with said chamber to allow said queen bee to be fed on the part of said colony of bees, suspending means (26) associated with said confining containing body (6) to suspend said containing body (6) within the nest of said beehive so as to maintain the proximity of said queen bee to said colony of bees during the confining period of said queen bee, **characterized in that** said suspending means (26) comprise a pair of coupling arms (27) to couple said containing body (6) to the rim of a nesting frame of said beehive, said coupling arms (27) comprising first portions (30) rigidly connected to the upper rim of said rear wall (7), second portions (31) rigidly connected to said first portions (30), and third portions (32) flexibly connected to said second portions (31), so that said containing body (6) lies in a vertical position within the zone vertically delimited by said frame and so that the frame can be layed down along with the structure (5) inside the beehive nest.

2. Structure (5), according to claim 1, **characterized in that** said containing body (6) has an essentially box-like form.

3. Structure (5), according to claim 1 or 2, **characterized in that** said containing body (6) comprises a rear wall (7), peripheral walls (8, 9, 10, 11) rigidly connected to each other and to said rear wall (7), a front wall (12) flexibly connected to a lower wall (11) of said peripheral walls (8, 9, 10, 11), and first engaging elements (13) to engage said front wall (12) in an upper wall (9) of said peripheral walls (8, 9, 10, 11) opposite to said lower wall (11).

4. Structure (5), according to claim 3, **characterized in that** said first engaging elements (13) comprise pairs of projections (14) set side by side and projecting from the zone of said front wall (12) facing the rim of said upper wall (9).

5. Structure (5), according to claim 3 or 4, **characterized in that** a reception chamber (15) comprises a space delimited by said rear, front and peripheral walls (7, 8, 9, 10, 11, 12).

6. Structure (5), according to claim 3, 4 or 5, **characterized in that** said introduction opening (16) comprises an elongated hole provided in the lower zone of said front wall (12).

7. Structure (5), according to claim 3, 4, 5, or 6, **characterized in that** said occluding means (18) comprise a door (19) flexibly connected to said front wall (12), so as to assume a first position wherein it closes said introduction opening (16) and a second position wherein it frees said opening (16), and coupling elements (20) to couple said door (19) in said first and second position to said front wall (12).

8. Structure (5), according to claim 7, **characterized in that** said coupling elements (20) comprise an appendix (21) extending from the rim of said door (19) and a first and a second pair of projections (22) set side by side and extending from one side to the other of said appendix (21), so as to engage in slots (24) found to the right and left of said opening (16) when said door (19) assumes said first and said second position, respectively.

9. Structure (5), according to claim 3, 4, 5, 6 ,7 or 8, **characterized in that** said plurality of slots (25) comprises vertical rows of elongated openings provided on said front and rear walls (12, 7).

10. Structure (5), according to claim 9, **characterized in that** said slots (25) are of a size such as allow said bees belonging to said colony to transit to and from said reception chamber (15).

11. Structure (5), according to claims 3, 4, 5, 6, 7, 8, 9 or 10, **characterized in that** said suspending means (26) comprise second engaging elements (28) to engage said arms (27) in said upper wall (9).

12. Structure (5), according to claim 11, **characterized in that** said coupling arms (27) are engaged in an upper beam (29) of said frame.

13. Structure (5), according to claims 11 or 12, **characterized in that** said second engaging elements (28) comprise pairs of projections (33) set side by side and provided near the terminal ends of said arms (27).

14. Structure (5), according to claims 11, 12, 13 or 14, **characterized in that** it is producible by injection moulding of a plastic material, with the arms (27) extended and the front wall (12) in a condition rotated 180° with respect to its position when approached to said peripheral walls (8, 9, 10, 11).

## Patentansprüche

1. Einschließungsstruktur (5) zum Einschließen der Bienenkönigin einer Bienenkolonie eines Bienenstocks, Folgendes umfassend: einen Gehäusekörper (6), eine Aufnahmekammer in dem besagten Gehäusekörper (6) zur Aufnahme der besagten Bienenkönigin, wenigstens eine Eingangsöffnung (16) am besagten Gehäusekörper (6), die mit der besagten Kammer zur Einführung der besagten Bienenkönigin in die besagte Kammer kommuniziert, Verschlussmittel (18), die geeignet sind, an dem besagten, kastenähnlichen Gehäusekörper (6) angekuppelt oder von diesem entkuppelt zu werden, um die besagte Öffnung (16) zu verschließen, sowie eine Vielzahl von Fütterungsschlitzen (25) an dem besagten Gehäusekörper (6), die mit der besagten Kammer kommunizieren, um die Fütterung der besagten Bienenkönigin durch die besagte Bienenkolonie zu ermöglichen, Aufhängemittel (26), die mit dem besagten, einschließenden Gehäusekörper (6) verbunden sind, um den besagten Gehäusekörper (6) im Nest des besagten Bienenstocks aufzuhängen, um die Nähe der besagten Bienenkönigin zu der besagten Bienenkolonie während der Einschließungsperiode der besagten Bienenkönigin aufrechtzuerhalten, **dadurch gekennzeichnet, dass** die besagten Aufhängemittel (26) ein Paar Kupplungsarme (27) umfassen, um den besagten Gehäusekörper (6) am Rand eines Brutrahmens des besagten Bienenstocks anzukuppeln, wobei die besagten Kupplungsarme (27) erste Abschnitte (30) umfassen, die starr mit dem oberen Rand der besagten Rückwand (7) verbunden sind, sowie zweite Abschnitte (31), die starr mit den besagten ersten Abschnitten (30) verbunden sind, und dritte Abschnitte (32), die flexibel mit den besagten zweiten Abschnitten (31) verbunden sind, so dass der besagte Gehäusekörper (6) in einer senkrechten Position innerhalb des senkrecht durch den besagten Rahmen begrenzten Bereichs liegt und so dass der Rahmen mit der Struktur (5) in das Bienenstocknest gelegt werden kann.

2. Struktur (5) gemäß Patentanspruch 1, **dadurch gekennzeichnet, dass** der besagte Gehäusekörper (6) im Wesentlichen kastenähnlich ist.

3. Struktur (5) gemäß Patentanspruch 1 oder 2, **dadurch gekennzeichnet, dass** der besagte Gehäusekörper (6) eine Rückwand (7) umfasst sowie Umfangswände (8, 9, 10, 11), die starr miteinander und mit der besagten Rückwand (7) verbunden sind, eine Vorderwand (12), die flexibel mit einer unteren Wand (11) der besagten Umfangswände (8, 9, 10, 11) verbunden ist, sowie erste Einrastelemente (13), um die besagte Vorderwand (12) in eine obere Wand (9) der besagten Umfangswände (8, 9, 10, 11), die der besagten unteren Wand (11) gegenüberliegt, einrasten zu lassen.

4. Struktur (5) gemäß Patentanspruch 3, **dadurch gekennzeichnet, dass** die besagten, ersten Einrastelemente (13) Paare nebeneinander positionierter Auskragungen (14) umfassen, die aus dem Bereich der besagten Vorderwand (12) herausragen, die zum Rand der besagten oberen Wand (9) gerichtet ist.

5. Struktur (5) gemäß Patentanspruch 3 oder 4, **dadurch gekennzeichnet, dass** eine Aufnahmekammer (15) einen durch die besagten Rück-, Vorder- und Umfangswände (7, 8, 9, 10, 11, 12) begrenzten Raum umfasst.

6. Struktur (5) gemäß Patentanspruch 3, 4 oder 5, **dadurch gekennzeichnet, dass** die besagte Eingangsöffnung (16) ein längliches Loch im unteren Bereich der besagten Vorderwand (12) umfasst.

7. Struktur (5) gemäß Patentanspruch 3, 4, 5 oder 6, **dadurch gekennzeichnet, dass** die besagten Verschlussmittel (18) eine Tür (19) umfassen, die flexibel mit der besagten Vorderwand (12) verbunden ist, so dass sie eine erste Position einnimmt, in der sie die besagte Eingangsöffnung (16) schließt, und eine zweite Position, in der sie die besagte Öffnung (16) freigibt, sowie Kupplungselemente (20), um die besagte Tür (19) in der besagten ersten und zweiten Position an der besagten Vorderwand (12) anzukuppeln.

8. Struktur (5) gemäß Patentanspruch 7, **dadurch gekennzeichnet, dass** die besagten Kupplungselemente (20) einen Fortsatz (21) umfassen, der sich vom Rand der besagten Tür (19) erstreckt, sowie ein erstes und ein zweites Paar nebeneinander befindlicher Auskragungen (22), die von einer Seite des besagten Fortsatzes (21) zur anderen reichen, so dass sie in Schlitzen (24) einrasten, die sich jeweils rechts und links von der besagten Öffnung (16) befinden, wenn die besagte Tür (19) die besagte erste und zweite Position einnimmt.

9. Struktur (5) gemäß Patentanspruch 3, 4, 5, 6, 7 oder 8, **dadurch gekennzeichnet, dass** die besagte Vielzahl Schlitze (25) senkrechte Reihen länglicher Öffnungen an der besagten Vorder- bzw. Rückwand (12, 7) umfasst.

10. Struktur (5) gemäß Patentanspruch 9, **dadurch gekennzeichnet, dass** die besagten Schlitze (25) derart dimensioniert sind, dass die besagten zu der besagten Kolonie gehörigen Bienen sich in die und aus der besagten Aufnahmekammer (15) heraus begeben können.

11. Struktur (5) gemäß Patentanspruch 3, 4, 5, 6, 7, 8, 9 oder 10, **dadurch gekennzeichnet, dass** die besagten Aufhängemittel (26) zweite Einrastelemente (28) umfassen, um die besagten Arme (27) in die besagte obere Wand (9) einrasten zu lassen.

12. Struktur (5) gemäß Patentanspruch 11, **dadurch gekennzeichnet, dass** die besagten Kupplungsarme (27) in einem oberen Balken (29) des besagten Rahmens eingerastet sind.

13. Struktur (5) gemäß Patentanspruch 11 oder 12, **dadurch gekennzeichnet, dass** die besagten, zweiten Einrastelemente (28) Paare nebeneinander positionierter Auskragungen (33) umfassen, die sich nahe der Endstücke der besagten Arme (27) befinden.

14. Struktur (5) gemäß Patentanspruch 11, 12, 13 oder 14, **dadurch gekennzeichnet, dass** sie durch Spritzgießen eines Kunststoffs produzierbar ist, mit ausgezogenen Armen (27) und der Vorderwand (12) in einer um 180° gedrehten Lage bezüglich ihrer Position, wenn sie an die besagten Umfangswände (8, 9, 10, 11) angenähert wird.

## Revendications

1. Structure de délimitation (5) pour confiner la reine des abeilles d'une colonie d'abeilles d'une ruche comprenant un corps de confinement (6), une chambre de réception réalisée dans ledit corps de confinement (6) pour accueillir ladite reine des abeilles, au moins une ouverture d'introduction (16) réalisée sur ledit corps de confinement (6) et communiquant avec ladite chambre pour introduire ladite reine des abeilles dans ladite chambre, des moyens d'occlusion (18) qui peuvent être accouplés/désaccouplés audit/dudit corps de confinement (6) pour obstruer ladite ouverture (16) et une pluralité de fentes d'alimentation (25) réalisées sur ledit corps de confinement (6) et communiquant avec ladite chambre afin de consentir l'alimentation de ladite reine des abeilles de la part de ladite colonie d'abeilles, des moyens de suspension (26) associés audit corps de délimitation /confinement (6) pour suspendre ledit corps de confinement (6) dans le nid de ladite ruche de façon à maintenir la proximité de ladite reine des abeilles à ladite colonie d'abeilles durant la période de délimitation de ladite reine d'abeilles, **caractérisée en ce que** lesdits moyens de suspension (26) comprennent un couple de bras de raccordement (27) pour accoupler ledit corps de confinement (6) au bord d'un cadre de ladite ruche, lesdits bras de raccordement (27) comprenant de premières portions (30) rigidement reliées au bord supérieure de ladite paroi arrière (7), de deuxièmes portions (31) rigidement reliées auxdites premières portions (30) et troisièmes portions (32) flexiblement reliées auxdites deuxièmes portions (31), de façon à ce que ledit corps de confinement (6) se trouve en position verticale dans la zone délimitée verticalement par ledit cadre et tel que ledit cadre peut être repositionné à l'intérieur du nid de la ruche avec la structure (5) fixée à celle-ci.

2. Structure (5) selon la revendication 1, **caractérisé en ce que** ledit corps de confinement (6) présente une forme essentiellement de boîte.

3. Structure (5) selon la revendication 1 ou 2, **caractérisée en ce que** ledit corps de confinement (6) comprend une paroi arrière (7), des parois de périmètre (8, 9, 10, 11) reliées rigidement entre elles et à ladite paroi arrière (7), une paroi avant (12) reliée flexiblement à une paroi inférieure (11) desdites parois de périmètre (8, 9, 10, 11) et de premiers éléments d'engagement (13) pour engager ladite paroi avant (12) à une paroi supérieure (9) desdites parois de périmètre (8, 9, 10, 11) opposée à ladite paroi inférieure (11).

4. Structure (5) selon la revendication 3, **caractérisée en ce que** lesdits deux premiers éléments d'engagement (13) comprennent des couples de saillies (14) disposées l'une à côté de l'autre saillant de la zone de ladite paroi avant (12) tournée vers le bord de ladite paroi supérieure (9).

5. Structure (5) selon la revendication 3 ou 4, **caractérisée en ce que** une chambre de réception (15) comprend un espace délimité par lesdites parois arrière, avant et de périmètre (7, 8, 9, 10, 11, 12).

6. Structure (5) selon les revendications 3, 4, ou 5, **caractérisée en ce que** ladite ouverture d'introduction (16) comprend un trou allongé réalisé dans la zone inférieure de ladite paroi avant (12).

7. Structure (5) selon les revendications 3, 4, 5 ou 6, **caractérisée en ce que** lesdits moyens d'occlusion (18) comprennent une porte (19) reliée flexiblement à ladite paroi avant (12) de façon à assumer une première position dans laquelle elle ferme ladite ouverture d'introduction (16) et une deuxième position dans laquelle elle libère ladite ouverture (16), et des éléments de raccordement (20) pour accoupler ladite porte (19) dans ladite première et ladite deuxième positions à ladite paroi avant (12).

8. Structure (5) selon la revendication 7, **caractérisée en ce que** lesdits éléments de raccordement (20) comprennent une appendice (21) s'étendant du bord de ladite porte (19) et un premier et un deuxième couples de saillies (22) disposées l'une à côté de l'autre et s'étendant d'un côté à l'autre de ladite appendice (21) de façon à s'engager dans des fentes (24) qui se trouvent à la droite et à la gauche de ladite ouverture (16) quand ladite porte (19) assume ladite première et ladite deuxième positions.

9. Structure (5) selon les revendications 3, 4, 5, 6, 7 ou 8, **caractérisée en ce que** ladite pluralité de fentes (25) comprend une série verticale d'ouvertures allongées réalisées sur lesdites parois arrière et avant (12, 7).

10. Structure (5) selon la revendications 9, **caractérisée en ce que** lesdites fentes (25) ont une dimension telle à consentir le transit de et par ladite chambre de réception (15) desdites abeilles appartenant à ladite colonie.

11. Structure (5) selon les revendications 3, 4, 5, 6, 7, 8, 9 ou 10, **caractérisée en ce que** lesdits moyens de suspension (26) comprennent de deuxièmes éléments d'engagement (28) pour engager lesdits bras (27) à ladite paroi supérieure (9).

12. Structure (5) selon la revendication 11, **caractérisée en ce que** lesdits bras de raccordement (27) sont engagés à une traverse supérieure (29) dudit cadre.

13. Structure (5) selon les revendications 11 ou 12, **caractérisée en ce que** lesdits deuxièmes éléments d'engagement (28) comprennent des couples de saillies (33) disposées l'une à côté de l'autre réalisées à proximité des extrémités finales desdits bras (27).

14. Structure (5) selon les revendications 11, 12, 13 ou 14, **caractérisée en ce qu'**elle peut être réalisée avec moulage par injection d'une matière plastique avec les bras de suspension (27) étendus et la paroi avant (12) tournée de 180° par rapport à sa position approchée desdites parois de périmètre (8, 9, 10, 11).
